Europäisches Patentamt

European Patent Office

Office européen des brevets

(19)

(11) Veröffentlichungsnummer: **0 228 595 B1**

(12) **EUROPÄISCHE PATENTSCHRIFT**

(45) Veröffentlichungstag der Patentschrift: **13.03.91**

(21) Anmeldenummer: 86116863.1

(22) Anmeldetag: **04.12.86**

(51) Int. Cl.⁵: **C04B 28/06**, C04B 22/10,
//(C04B28/06,22:00,22:10,22:14,
24:06,28:04)

(54) **Schnellerhärtende Bindemittelmischung.**

(30) Priorität: 06.12.85 DE 3543210

(43) Veröffentlichungstag der Anmeldung:
**15.07.87 Patentblatt 87/29**

(45) Bekanntmachung des Hinweises auf die
Patenterteilung:
**13.03.91 Patentblatt 91/11**

(84) Benannte Vertragsstaaten:
**AT BE CH DE FR GB IT LI LU NL SE**

(56) Entgegenhaltungen:
**EP-A- 0 151 452          EP-A- 0 181 739
GB-A- 2 058 037          GB-A- 2 058 037
GB-A- 2 159 512          US-A- 4 012 264
US-A- 4 357 166**

(73) Patentinhaber: **SICOWA Verfahrenstechnik für
Baustoffe GmbH & Co. KG
Handerweg 17
W-5100 Aachen(DE)**

(72) Erfinder: **Deuser, Martin, Dipl.-Ing.
An den Frauenbrüdern 2
W-5100 Aachen(DE)**
Erfinder: **Ludwig, Udo, Prof.Dr.-Ing.
Düserhofstrasse 48
W-5100 Aachen(DE)**

(74) Vertreter: **Sparing Röhl Henseler Patentanwälte European Patent Attorneys
Rethelstrasse 123
W-4000 Düsseldorf 1(DE)**

## Beschreibung

Die Erfindung betrifft eine schnellerhärtende hydraulische Bindemittelmischung zur Verwendung mit Wasser und gegebenenfalls Zuschlägen und Zusätzen.

Aus der GB-A-2 058 037 ist eine Mischung für Hohlraumverfüllungen bekannt, die wasserreich, tonhaltig und von hohem Sulfat- und Tonerdezementgehalt ist. Die Mischung enthält Portlandzement, der von Hause aus einen gewissen Sulfatgehalt mit sich bringt, da er durch Vermahlen von Klinker mit Gips oder Anhydrit hergestellt wird. Zusätzlich ist Calciumsulfat in der Mischung vorhanden, und zwar ist der Gesamtsulfatgehalt derart, daß die Schnellerstarrung über Ettringit erfolgt. Dies führt dazu, daß ein derartiges Gemisch nicht wärmebehandlungsfähig ist. Außerdem besitzt dieses Gemisch einen relativ niedrigen Gesamtkalkgehalt, der zusammen mit der Ettringitbildung dazu führt, daß sich eine derartige Mischung nicht für den Hochbau bzw. zur Herstellung von Betonfertigteilen eignet.

Aufgabe der Erfindung ist es, eine Bindemittelmischung zu schaffen, die sich zur Herstellung einer Mörtelmischung eignet, gegebenenfalls aber auch mit Wasser angemacht als Paste verwendbar ist und bei der die Topfzeit über Verzögererzugabe einstellbar ist, wobei sich eine sehr steile Erstarrungscharakteristik nach Beendigung der Topfzeit mit sehr hohen Frühfestigkeiten, insbesondere im Bereich von 2h bis 1d, und mit hohen Endfestigkeiten ergibt.

Diese Aufgabe wird gelöst, durch eine schnellerhärtende Bindemittelmischung zur Verwendung mit Wasser und gegebenenfalls Zuschlägen und Zusätzen, bestehend aus:

a. Portlandzementklinker in einer Menge von 75 bis 95 Masse-%,

b. reaktiven Calciumaluminaten in Form von CA, $C_{12}A_7$ und/oder Tonerdezement in einer Menge von 5 bis 25 Masse-%,

und zusätzlich bezogen auf die 100 Masse-% bildenden Komponenten a und b folgende Komponenten:

c. reaktives Calciumsulfat in einer Menge von 2,5 bis 4 Masse-%,

d. organischer, die Hydratation von Calciumaluminaten hemmender Abbindeverzögerer in einer Menge von 0,1 bis 1 Masse-% und

e. Alkalicarbonat in einer Menge von 0,2 bis 0,8 Masse-% $Na_2O$-Äquivalent,

wobei der Gesamt-CaO-Gehalt mindestens derart eingestellt ist, daß keine metastabilen oder kalkarmen Calciumaluminat- oder -ferrithydrate auftreten können, und der Sulfatgehalt derart niedrig ist, daß die Früherhärtung überwiegend über Tetracalciummonoaluminathydratphasen $(C_4AH_x,$

$C_3ACcH_{11})$ erfolgt.

Mit dieser Bindemittelmischung hergestellte Produkte sind wärmebehandlungsfähig, beispielsweise können sie einer Hochfrequenzerwärmung oder einer Dampf-, Klima- oder Autoklavbehandlung unterworfen werden, ersteres etwa zur Steigerung bzw. zum schnellen Erreichen von Grünfestigkeit und letztere zum Steigern der Frühfestigkeit im Bereich von mehreren Stunden bis zu etwa 2 Tagen. Weiterhin ist es vorteilhaft, daß sich die Topfzeit in relativ weiten Bereichen einstellen läßt. Außerdem ist der Wasserbedarf relativ gering.

Die Bindemittelmischung ist beispielsweise anwendbar zur Herstellung zementgebundener Mörtel, wie Estriche, Putze, Reparaturmörtel, Fertigbeton- und Betonteileherstellung, konstruktive Betonteile, Bergbaumörtel und Kleber.

Überraschenderweise hat sich gezeigt, daß im Zusammenhang mit dieser Bindemittelmischung das enthaltene Alkalicarbonat anfangs sowohl verflüssigend als auch verzögernd wirkt, wobei sich insgesamt ein komplexer Verzögerungsvorgang ergibt. Im späteren Verlauf der Reaktion wirkt es jedoch beschleunigend und festigkeitserhöhend. Die Früherhärtung erfolgt hierbei überwiegend über Tetracalciummonoaluminathydratphasen $(C_4AH_x)$ und zum geringeren Teil über Ettringit. In der Bindemittelmischung ist ein sehr niedriges Verhältnis von Sulfat zu reaktivem Aluminat. Außerdem ist der Sulfatgehalt selbst sehr niedrig, wodurch sich eine gute Raumbeständigkeit und Wärmebehandlungsfähigkeit ergibt.

Portlandzementklinker ist vorzugsweise in einer Menge von 85 bis 95 Masse-% und reaktives Aluminat in einer Menge von 5 bis 15 Masse-% in der Bindemittelmischung enthalten. Als reaktive Calciumaluminate wird vorzugsweise Tonerdezement mit einem hohen CA-Anteil etwa in der Größenordnung von 60 Masse-% verwendet. Der Portlandzementklinker kann zusammen mit dem reaktiven Calciumsulfat, das als Beschleuniger für das reaktive Aluminat etwa des Tonerdezement wirkt, zu einem Portlandzement, jedoch mit einem entsprechend kleinen Sulfatgehalt entsprechend dem angegebenen Bereich vermahlen sein. Als reaktives

Calciumsulfat kommt insbesondere Calciumsulfathalbhydrat, vorzugsweise in Form von Stuckgips, infrage. Jedoch kann auch reaktives Calciumsulfatanhydrit gegebenenfalls in Mischung mit Halbhydrat verwendet werden. Calciumsulfathalbhydrat ist vorzugsweise in einer Menge von 2,8 bis 3,5 Masse-% enthalten. Das reaktive Calciumsulfat kann bis zu 50 Masse-%, insbesondere bis zu 25 Masse-%, durch schwerlösliches Calciumsulfatanhydrit und/oder -dihydrat ersetzt werden.

Als organischer Abbindeverzögerer eignet sich beispielsweise eine Oxycarbonsäure oder deren leicht lösliches Salz oder eine Mischung aus Oxycarbonsäuren bzw. deren leicht löslichen Salzen. Wenn es sich bei der Bindemittelmischung um eine Fertigmischung handelt, die als solche vorzugsweise vorgemischt und zur Verwendung mit Wasser und gegebenenfalls Zuschlägen und Zusätzen angemacht wird, versteht es sich, daß der organische Abbindeverzögerer pulverförmig enthalten ist, weshalb auch seine schnelle Löslichkeit von Bedeutung ist, um seine Verzögerungswirkung praktisch sofort entfalten zu können. Insbesondere eignet sich als Abbinderverzögerer Zitronensäure, die vorzugsweise in einer Menge von 0,2 bis 0,8 Masse-% enthalten ist und zudem mit anderen Oxycarbonsäuren wie Wein-, Apfel- oder Glukonsäure verwendet werden kann.

Als Alkalicarbonat kann insbesondere eine Mischung aus Natrium- und Kaliumcarbonat enthalten sein, wobei die Steilheit der Erstarrungscharakteristik der angemachten Bindemittelmischung in gewünschter Weise eingestellt werden kann mit der Maßgabe, daß Kaliumcarbonat die Steilheit erhöht und Natriumcarbonat die Charakteristik neigt.

Calcit kann in einer Menge von 3 bis 15 Masse-%, insbesondere 3 bis 9 Masse-%, jeweils bezogen auf die 100 Masse-% bildenden Komponenten a und b, in der Bindemittelmischung enthalten sein. Calcit mit großer Feinheit, insbesondere mit einer Oberfläche von mehr als 10000 Blaine, vorzugsweise mehr als 20000 Blaine, wird bevorzugt. Die Verwendung von Calcit führt in der Früherhärtung zur Bildung von Tetracalciummonoaluminatmonocarbonathydratphasen ($C_3AC\bar{c}H_{11}$) verbunden mit einer Festigkeitssteigerung.

Der Portlandzementklinker sollte einen Tonerdemodul grösser 2 aufweisen.

Die Bindemittelmischung kann ferner Si-Stoff, d.h. amorphe Kieselsäure aus der Ferro-Silizium-Produktion, enthalten. Der Si-Stoff kann in einer Menge bis 10 Masse-%, vorzugsweise bis 6 Masse-%, jeweils bezogen auf die 100 Masse-% bildenden Komponenten a und b, enthalten sein.

Als Zuschläge bzw. Zusätze kommen Quarzmehl, -sand und -körnung sowie ferner Hüttensand, Flugasche, Kalksteinsand oder -mehl, Haftverbesserer, Hydrophobierungsmittel, Pigmente etc. infrage.

Damit keine metastabilen oder kalkarmen Calciumaluminat- oder -ferrithydratphasen langzeitig auftreten, kann Kalkhydrat in entsprechender Menge zur Erzielung eines ausreichenden CaO-Gehalt in der Bindemittelmischung enthalten sein, damit ein stabiles Langzeitverhalten gewährleistet ist.

In den beigefügten Diagrammen sind Versuchsergebnisse dargestellt.

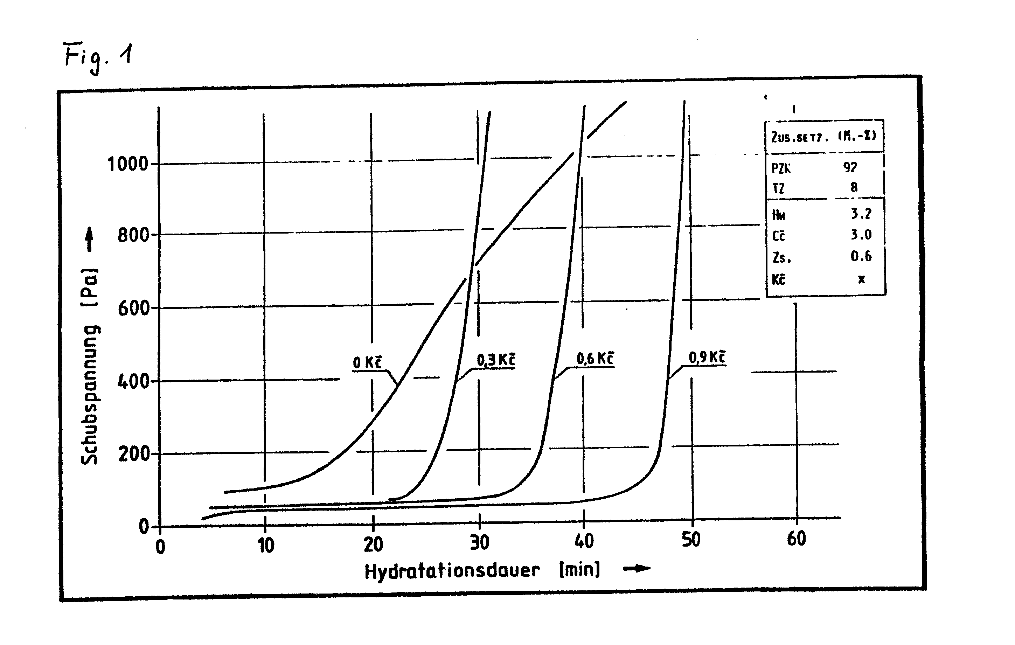

Fig. 1 zeigt die Abhängigkeit der Schubspannung bei Viskositätsmessungen als Maß der Verarbeitbarkeit von der Hydratationsdauer für eine Paste einer Bindemittelmischung mit verschiedenen Gehalten von Kaliumcarbonat ($K\bar{c}$) und für eine sonstige Zusammensetzung der Bindemittelmischung aus Portlandzementklinker (PZK) in einer Menge von 92 Masse-% und 8 Masse-% Tonerdezement (TZ) mit einem Anteil von etwa 60 Masse-% CA-Phasen sowie bezogen auf die 100 Masse-% PZK + TZ 3,2 Masse-% Halbhydrat (Hw), 3,0 Masse-% Calcit ($C\bar{c}$) mit einer Blaine-Oberfläche von 25000 (zur Bildung von Monocarbonatphasen) und 0,6 Masse-% Zitronensäure (Zs.). Der Erstarrungsbeginn liegt bei etwa 600 Pa und das Erstarrungsende bei etwa 1200 Pa bei dem verwendeten Rotationsviskosimeter und Versuchsparameter. Ersichtlich bewirkt der Zusatz von Kaliumcarbonat eine sehr steil ausgebildete Erstarrungscharakteristik sowie eine Verzögerung des Erstarrungsbeginns und -endes, d.h. eine Vergrößerung der Topfzeit.

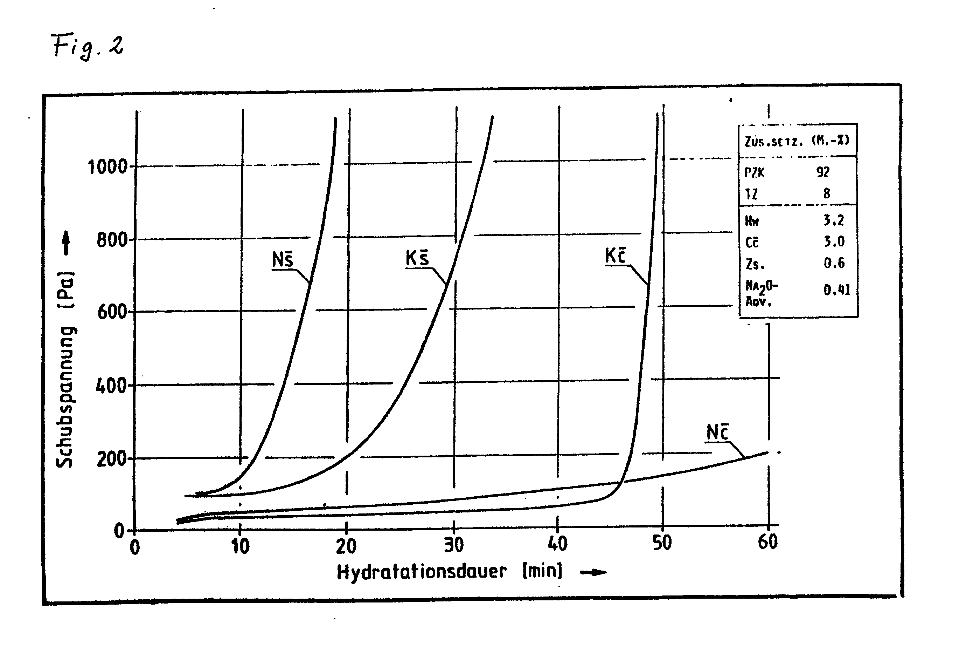

Fig. 2 zeigt die Abhängigkeit der Schubspannung von der Hydratationsdauer bei Zugabe verschiedener Alkalisalze für eine ansonsten gleiche Bindemittelmischung, wie oben beschrieben. Vergleichskurve ist hierbei die Kurve "0 $K\bar{c}$" von Fig. 1. Während bei Fig. 1 die Menge an Masse-% $K\bar{c}$ (bezüglich Fig. 1 nicht als $Na_2O$-Äquivalent angegeben) variiert ist, ist hier der Betrag an Alkalisalz gleichbleibend 0,41 Masse-% ausgedrückt als $Na_2O$-Äquivalent. Der Zusatz von Natriumcarbonat ($N\bar{c}$) alleine vergrößert die Topfzeit und verflacht die Erstarrungscharakteristik. Der Zusatz von Natriumsulfat ($N\bar{s}$) bzw. Kaliumsulfat ($K\bar{s}$) führt zu größerer Steilheit der Erstarrungscharakteristik, jedoch zu keiner Verlängerung der Topfzeit, vielmehr führt $N\bar{s}$ zu einer Verringerung der Topfzeit. Durch eine entsprechende Kombination von Alkalisalzen läßt sich daher eine gewünschte Topfzeit und Steilheit der Erstarrungscharakteristik einstellen.

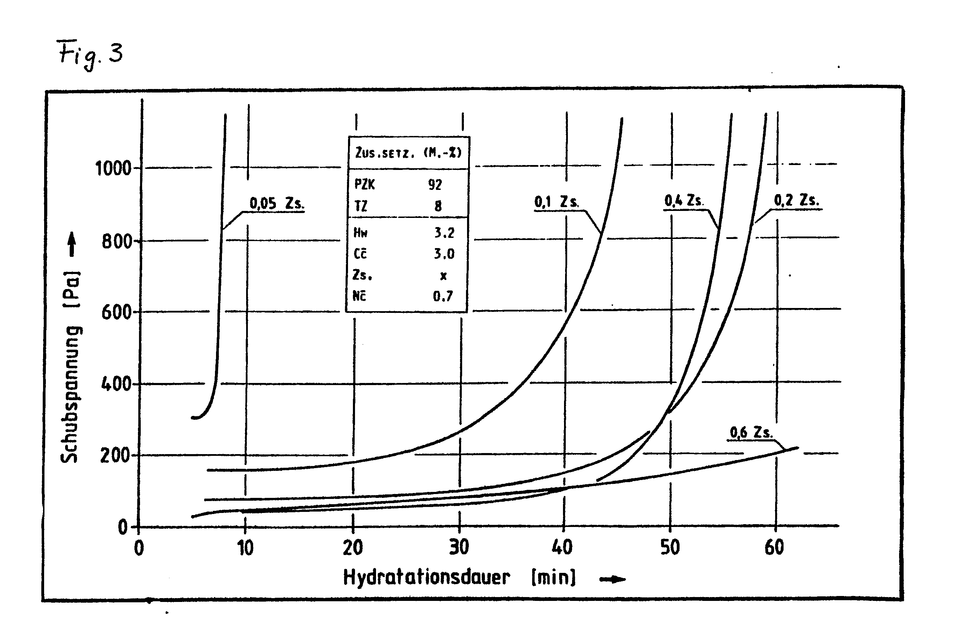

Fig. 3 zeigt die Abhängigkeit der Schubspannung von der Hydratationsdauer bei verschiedenen Zitronensäuregehalten bei einer Bindemittelmischung ansonsten wie bezüglich Fig. 1 und mit einem Gehalt an $N\bar{c}$ von 0,7 Masse-% verwendet. Hieraus ist ersichtlich, daß steigende Mengen an Zitronensäure die Topfzeit vergrößernd beeinflussen.

Bei den Versuchen, die zur Erstellung der Fig. 1 bis 3 durchgeführt wurden, war das Wasser/Bindemittelmischungs-Verhältnis W/Z = 0,3.

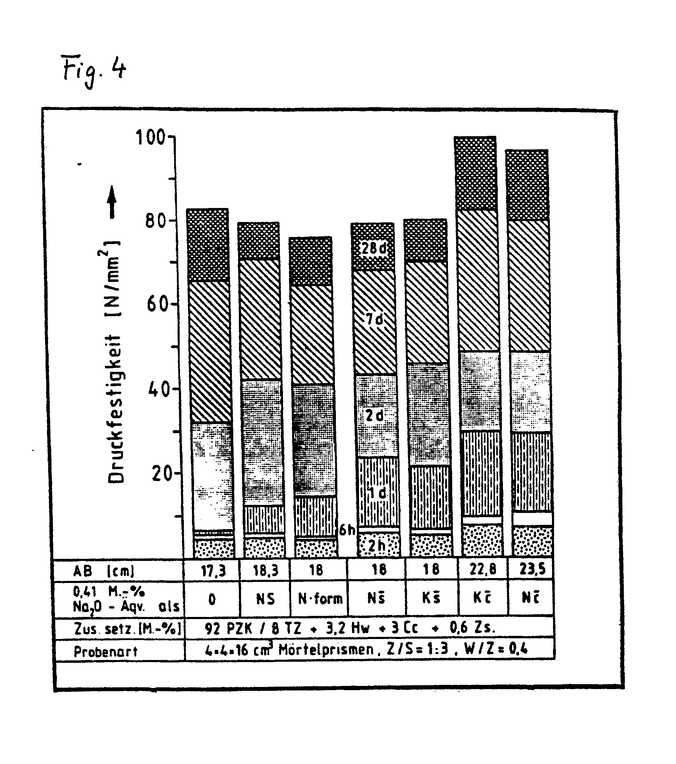

Fig. 4 zeigt die Abhängigkeit der Druckfestigkeit von der Zeit, wobei die unterschiedlich schraffierten Abschnitte der Säulen aufeinanderfolgend 2h, 6h, 1d, 2d, 7d und 18d bedeuten. Die Zusammensetzung der Bindemittelmischung ist 92 M.-% PZK + 8 M.-% TZ, zusätzlich berechnet auf 100 M.-% 3,2 M.-% Hw, 3 M.-% $C\bar{c}$, 0,6 M.-% Zs. sowie 0,41 M.-% $Na_2O$-Äquivalent von 0, NS (Natriumsilikat), N*form (Natriumformiat), $N\bar{s}$, $K\bar{s}$

, K $\bar{c}$ und N $\bar{c}$ . Hierbei handelt es sich um 4x4x16 cm³ Mörtelprismen hergestellt mit einem Verhältnis Bindemittelmischung zu Normsand Z/S = 1:3 und einem Wasser/Bindemittelmischungs-Verhältnis von W/Z = 0,4. Aus dieser Figur ist ersichtlich, daß der Zusatz von Alkalicarbonaten die Früh- als auch die Endfestigkeit erhöht und verflüssigend wirkt, das Ausbreitmaß AB (in cm angegeben gemäß DIN 1045) ist gegenüber den anderen Zusätzen beträchtlich erhöht.

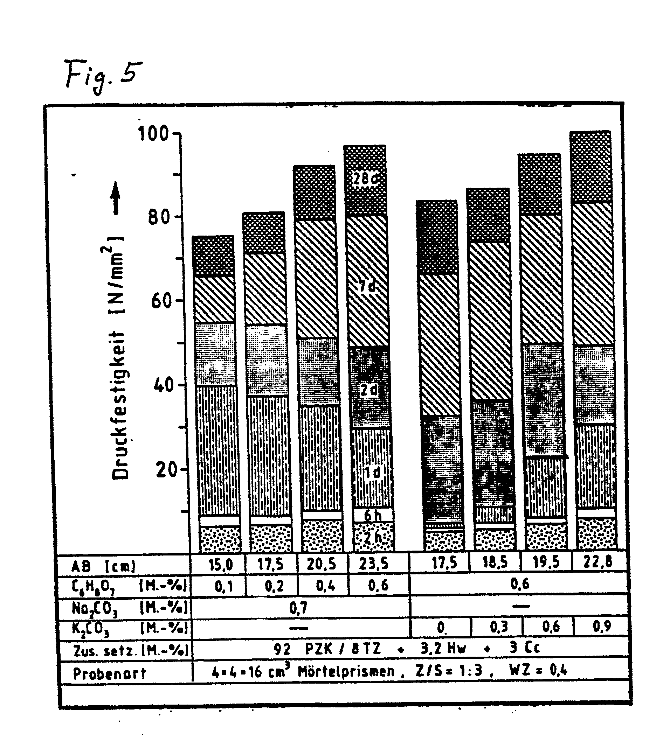

Fig. 5 ist ein entsprechendes Diagramm wie Fig. 4 und zeigt die Abhängigkeit bezüglich variabler Mengen an Zitronensäure (linke Seite) bzw. variabler Mengen Kaliumcarbonat (rechte Seite). Hieraus ist entnehmbar, daß geringere Menge an Zitronensäure zu einer erhöhten Frühfestigkeit im Tagesbereich führen, jedoch größere Mengen an Zitronensäure die Endfestigkeit verbessern und zu einer größeren Verflüssigung führen. Größere Mengen an Kaliumcarbonat vergrößern sowohl die Frühfestigkeit im Tagesbereich als auch die Endfestigkeit und wirken in Bezug auf verstärkte Verflüssigung.

Sämtliche Versuche wurden bei 20°C ausgeführt.

**Ansprüche**

1. Schnellerhärtende Bindemittelmischung zur Verwendung mit Wasser und gegebenenfalls Zuschlägen und Zusätzen, bestehend aus:

   a. Portlandzementklinker in einer Menge von 75 bis 95 Masse-%,

   b. reaktiven Calciumaluminaten in Form von CA, $C_{12}A_7$ und/oder Tonerdezement in einer Menge von 5 bis 25 Masse-%,

   und zusätzlich bezogen auf die 100 Masse-% bildenden Komponenten a und b folgende Komponenten:

   c. reaktives Calciumsulfat in einer Menge von 2,5 bis 4 Masse-%,

   d. organischer, die Hydration von Calciumaluminaten hemmender Abbindeverzögerer in einer Menge von 0,1 bis 1 Masse-% und

   e. Alkalicarbonat in einer Menge von 0,2 bis 0,8 Masse-% $Na_2$)-Äquivalent,

   wobei der Gesamt-CaO-Gehalt mindestens derart eingestellt ist, daß keine metastabilen oder kalkarmen Calciumaluminat- oder -ferrithydrate auftreten können, und der Sulfatgehalt derart niedrig ist, daß die Früherhärtung überwiegend über Tetracalciummonoaluminathydratphasen ($C_4AH_x$, $C_3AC$ $\bar{c}$ $H_{11}$) erfolgt.

2. Bindemittelmischung nach Anspruch 1, dadurch gekennzeichnet, daß Portlandzementklinker in einer Menge von 85 bis 95 Masse-% und reaktives Aluminat in einer Menge von 5 bis 15 Masse-% enthalten ist.

3. bindemittelmischung nach Anspruch 1 oder 2, dadurch gekennzeichnet, daß als reaktives Calciumsulfat Calciumsulfathalbhydrat, insbesondere Stuckgips, enthalten ist.

4. Bindemittelmischung nach Anspruch 3, dadurch gekennzeichnet, daß Calciumsulfathalbhydrat in einer Menge von 2,8 bis 3,5 Masse-% enthalten ist.

5. Bindemittelmischung nach einem der Ansprüche 1 bis 4, dadurch abgewandelt, daß das reaktive Calciumsulfat bis zu 50 Masse-%, insbesondere bis zu 25 Masse-%, durch schwerlösliches Calciumsulfatanhydrit und/oder -dihydrat ersetzt ist.

6. Bindemittelmischung nach einem der Ansprüche 1 bis 5, dadurch gekennzeichnet, daß der organische Abbindeverzögerer aus einer Oxycarbonsäure oder einer Mischung aus Oxycarbonsäuren bzw. deren leicht löslichen Salzen besteht.

7. Bindemittelmischung nach Anspruch 6, dadurch gekennzeichnet, daß der organische Abbindeverzögerer im wesentlichen aus Zitronensäure besteht.

8. Bindemittelmischung nach Anspruch 6 oder 7, dadurch gekennzeichnet, daß 0,2 bis 0,8 Masse-% Zitronensäure enthalten sind.

9. Bindemittelmischung nach einem der Ansprüche 1 bis 8, dadurch gekennzeichnet, daß als Alkalicarbonat eine Mischung aus Natrium- und Kaliumcarbonat enthalten ist.

10. Bindemittelmischung nach Anspruch 9, dadurch gekennzeichnet, daß die Steilheit der Erstarrungscharakteristik der angemachten Bindemittelmischung in gewünschter Weise eingestellt ist mit der Maßgabe, daß Kaliumcarbonat die Steilheit erhöht und Natriumcarbonat die Charakteristik neigt.

11. Bindemittelmischung nach einem der Ansprüche 1 bis 10, dadurch gekennzeichnet, daß Calcit in einer Menge von 3 bis 15 Masse-%, insbesondere 3 bis 9 Masse-%, jeweils bezogen auf die 100 Masse-% bildenden Komponenten a und b, enthalten ist.

12. Bindemittelmischung nach Anspruch 11, dadurch gekennzeichnet, daß Calcit mit großer Feinheit, insbesondere mit einer Oberfläche von mehr als 10000 Blaine, vorzugsweise mehr als 20000 Blaine, enthalten ist.

13. Bindemittelmischung nach einem der Ansprüche 1 bis 12, dadurch gekennzeichnet, daß der Portlandzementklinker einen Tonerdemodul grösser 2 aufweist.

14. Bindemittelmischung nach einem der Ansprüche 1 bis 13, dadurch gekennzeichnet, daß amorphe Kieselsäure enthalten ist.

15. Bindemittelmischung nach Anspruch 14, dadurch gekennzeichnet, daß die amorphe Kieselsäure in einer Menge bis 10 Masse-%, vorzugsweise bis 6 Masse-%, jeweils bezogen auf die 100 Masse-% bildenden Komponenten a und b, enthalten ist.

## Claims

1. A quick-hardening binder mixture for use with water and possibly additives and comprising:
   a. Portland cement clinker in a proportion of from 75 to 95 weight %;
   b. Reactive calcium aluminates in the form of CA, $C_{12}A_7$ and/or aluminous cement in a quantity of from 5 to 25 weight %; and, also referred to the 100 weight % forming components a and b , the following components:
   c. Reactive calcium sulphate in a quantity of from 2.5 to 4 weight %;
   d. Organic retarder retarding the hydration of calcium aluminates, in a quantity of from 0.1 to 1 weight %, and
   e. Alkali carbonate in a quantity of from 0.2 to 0.8 weight % $Na_2O$ equivalent,
   the total CaO content being adjusted at least so that no metastable or low-calcium calcium aluminate or calcium ferrite hydrate can occur and the sulphate content is so low that the rapid setting is produced mainly by way of tetracalcium monoaluminate hydrate phases ($C_4AH_x$, $C_3AC\bar{c}H_{11}$).

2. A mixture according to claim 1, characterised in that Portland cement clinker is present in a quantity of from 85 to 95 weight % and reactive aluminate is present in a quantity of from 5 to 15 weight %.

3. A mixture according to claim 1 or 2, characterised in that calcium sulphate hemihydrate, more particularly lump gypsum, is present as reactive calcium sulphate.

4. A mixture according to claim 3, characterised in that calcium sulphate hemihydrate is present in a quantity of from 2.8 to 3.5 weight %.

5. A mixture according to any of claims 1 to 4, characterised in that the reactive calcium sulphate is substituted up to 50 weight %, more particularly up to 25 weight %, by difficultly solluble calcium sulphate anhydrite and/or calcium sulphate dihydrate.

6. A mixture according to any of claims 1 to 5, characterised in that the organic retarder is a carboxylic acid or a mixture of carboxylic acids or the readily soluble salts thereof.

7. A mixture according to claim 6, characterised in that the organic retarder consists mainly of citric acid.

8. A mixture according to claim 6 or 7, characterised in that it contains from 0.2 to 0.8 weight % of citric acid.

9. A mixture according to any of claims 1 - 8, characterised in that a mixture of sodium carbonate and potassium carbonate is present as alkali carbonate.

10. A mixture according to claim 9, characterised in that the steepness of the setting characteristic of the gauged binder mixture is adjusted as required subject to potassium, carbonate increasing steepness and sodium carbonate inclining the characteristic.

11. A mixture according to any of claims 1 to 10, characterised in that calcite is present in a quantity of from 3 to 15 weight %, more particularly from 3 to 9 weight %, referred in each case to the 100 weight %-forming components a and b

12. A mixture according to claim 11, characterised in that calcite in very finely divided form, more particularly having a surface of more than 10 000 blains, preferably more than 20 000 blains, is present.

13. A mixture according to any of claims 1 to 12, characterised in that the Portland cement clinker has an alumina module greater than 2.

14. A mixture according to any of claims 1 to 13, characterised in that amorphous silicic acid is present.

15. A mixture according to claim 14, characterised in that the amorphous silicic acid is present in a quantity of up to 10 weight %, preferably up to 6 weight %, referred in each case to the 100 weight %-forming components a and b .

## Revendications

1. Mélange de liants à durcissement rapide pour l'utilisation avec de l'eau et éventuellement des agrégats et des additifs, constitué :

a. d'un klinker de ciment Portland dans une proportion de 75 à 95 % en poids,

b. d'aluminates de calcium réactifs sous la forme de Ca, $C_{12}A_7$ et/ou d'un ciment alumineux dans une proportion de 5 à 25 % en poids. et en outre, par rapport aux constituants a et b formant 100 % en poids, des constituants suivants :

c. du sulfate de calcium réactif dans une proportion de 2,5 à 4 % en poids,

d. un retardateur de prise organique, inhibant l'hydratation des aluminates de calcium, dans une proportion de 0,1 à 1 % en poids, et

e. un carbonate alcalin dans une proportion de 0,2 à 0,8% en poids d'équivalent de $Na_2O$, la teneur totale en CaO étant ajustée au moins de telle sorte qu'il n'apparaisse pas d'hydrateS d'aluminate de calcium ni de ferrite métastables ou pauvres en chaux, et que la teneur en sulfate soit suffisamment faible pour que le durcissement initial se produise principalement en passant par les phases hydrate de monoaluminate tétracalcique ($C_4AH_x$, $C_3AC \bar{c} H_{11}$).

2. Mélange de liants selon la revendication 1, caractérisé en ce que le klinker de ciment Portland est présent dans une proportion de 85 à 95 % en poids et l'aluminate réactif dans une proportion de 5 à 15 % en poids.

3. Mélange de liants selon la revendication 1 ou 2, caractérisé en ce qu'il contient comme sulfate de calcium réactif de l'hémihydrate de sulfate de calcium, en particulier du plâtre à mouler.

4. Mélange de liants selon la revendication 3, caractérisé en ce que l'hémihydrate de sulfate de calcium est présent dans une proportion de 2,8 à 3,5 % en poids.

5. Mélange de liants selon l'une des revendications 1 à 4, caractérisé en ce que le sulfate de calcium réactif est remplacé jusqu'à 50 % en poids en particulier jusqu'à 25 % en poids, par de l'anhydrite et/ou du dihydrate de sulfate de calcium peu soluble.

6. Mélange de liants selon l'une quelconque des revendications 1 à 5, caractérisé en ce que le retardateur de prise organique est constitué d'un acide oxycarboxylique ou d'un mélange d'acides oxycarboxyliques ou de leurs sels très solubles.

7. Mélange de liants selon la revendication 6, caractérisé en ce que le retardateur de prise organique se compose essentiellement d'acide citrique.

8. Mélange de liants selon la revendication 6 ou 7, caractérisé en ce qu'il contient 0,2 à 0,8 % en poids d'acide citrique.

9. Mélange de liants selon l'une des revendications 1 à 8, caractérisé en ce qu'il contient comme carbonate alcalin un mélange de carbonate de sodium et de carbonate de potassium.

10. Mélange de liants selon la revendication 9, caractérisé en ce que la raideur de la caractéristique de durcissement du mélange de liants gâché est ajustée de la manière souhaitée, en tenant compte de ce que le carbonate de potassium augmente la raideur et de ce que le carbonate de sodium infléchit la caractéristique.

11. Mélange de liants selon l'une des revendications 1 à 10, caractérisé en ce que la calcite est présente dans une proportion de 3 à 15 % en poids, en particulier de 3 à 9 % en poids, par rapport chaque fois aux constituants a et b formant 100 % en poids.

12. Mélange de liants selon la revendication 11, caractérisé en ce qu'il contient une calcite d'une grande finesse, ayant en particulier une surface supérieure à 10.000 Blaine, de préférence supérieure à 20.000 Blaine.

13. Mélange de liants selon l'une quelconque des revendications 1 à 12, caractérisé en ce que le klinker de ciment Portland présente un module d'alumine supérieur à 2.

14. Mélange de liants selon l'une des revendications 1 à 13, caractérisé en ce qu'il contient de l'acide silicique amorphe.

15. Mélange de liants selon la revendication 14, caractérisé en ce qu'il contient de l'acide silicique amorphe dans une quantité allant jusqu'à 10 % en poids, de préférence jusqu'à 6 % en poids, par rapport à chaque fois aux constituants a et b formant 100 % en poids.

Fig. 1

**Fig. 1**

| ZUS.SETZ. (M.-%) | |
|---|---|
| PZK | 92 |
| TZ | 8 |
| Hw | 3.2 |
| Cc | 3.0 |
| Zs. | 0.6 |
| Kc | x |

0 Kc    0,3 Kc    0,6 Kc    0,9 Kc

Schubspannung [Pa]

Hydratationsdauer [min]

EP 0 228 595 B1

Fig. 2

EP 0 228 595 B1

Fig. 3

Fig. 4

| AB [cm] | 17,3 | 18,3 | 18 | 18 | 18 | 22,8 | 23,5 |
|---|---|---|---|---|---|---|---|
| 0,41 M.-% Na₂O - Äqv. als | 0 | NS | N·form | NS̄ | KS̄ | KC̄ | NC̄ |
| Zus.setz.[M.-%] | 92 PZK / 8 TZ + 3,2 Hw + 3 Cc + 0,6 Zs. | | | | | | |
| Probenart | 4·4·16 cm³ Mörtelprismen , Z/S = 1:3 , W/Z = 0,4 | | | | | | |

## Fig. 5

| AB [cm] | 15,0 | 17,5 | 20,5 | 23,5 | 17,5 | 18,5 | 19,5 | 22,8 |
|---|---|---|---|---|---|---|---|---|
| $C_6H_8O_7$ (M.-%) | 0,1 | 0,2 | 0,4 | 0,6 | 0,6 | | | |
| $Na_2CO_3$ (M.-%) | 0,7 | | | | — | | | |
| $K_2CO_3$ (M.-%) | — | | | | 0 | 0,3 | 0,6 | 0,9 |
| Zus. setz. (M.-%) | 92 PZK / 8 TZ  +  3,2 Hw  +  3 Cc | | | | | | | |
| Probenart | 4·4·16 cm³ Mörtelprismen , Z/S = 1:3 ,  WZ = 0,4 | | | | | | | |